# FASCICULE DE BREVET EUROPEEN

(11) **EP 0 299 820 B1**
(45) Date de publication et mention de la délivrance du brevet: **28.04.1993**
(21) Numéro de dépôt: 88401558.7
(22) Date de dépôt: 21.06.1988
(51) Int. Cl.: C08K 13/02, C08J 3/22, C08L 21/00, C08L 95/00

(54) **Procédé de vulcanisation pour la préparation d'un liant routier**
Vulkanisationsverfahren zur Herstellung eines Strassenbindemittels
Vulcanisation method for the preparation of a road binder

(30) Priorité: 02.07.1987 FR 8709413
(43) Date de publication de la demande: 18.01.1989
(73) Titulaire: SOCIETE ANONYME D'APPLICATION DES DERIVES DE L'ASPHALTE- S.A.A.D.A., F-38150 Roussillon (FR)
(72) Inventeur: Trinh, Cu Cuong, F-69300 Caluire (FR); Million, Denis, F-69800 Venissieux (FR)
(74) Mandataire: Netter, André

(56) Documents cités:
- EP-A- 0 040 729
- DE-A- 1 470 874
- DE-A- 1 912 202
- JOURNAL OF APPLIED POLYMER SCIENCE, vol. 23, 1979, pages 185-200, John Wiley & Sons, Inc., New York, US; P.K. BANDYOPADHYAY et al.: "Sulfur vulcanization of natural rubber accelerated with 2-mercaptobenzothiazole plus tetramethylthiuram disulfide"
- Encyclopedia of polymer science and engineering, 1985, vol. 14, p. 704, 728, 744-45;
- Encyclopedia of polymer science and techn., 1974, vol. 14, p. 740 - 755; 1970, vol. 12, p. 256 - 272; 1965, vol. 2, p. 185 - 187;
- Gummi-Werkstoffe, K. Nagdi, Vogel-Verlag 1981, p. 53 - 60;
- Encycl. d. techn. Chemie, Bd. 11, Ullmann-Verlag, 1976, p. 450

## Description

L'invention est relative à la vulcanisation des élastomères pour la préparation de liants routiers à base de bitume.

Il est connu, pour améliorer les propriétés mécaniques et thermiques des bitumes utilisés comme liants routiers, d'y incorporer des élastomères.

Il est également connu d'utiliser, dans cette application comme dans diverses autres applications, des élastomères vulcanisés, c'est-à-dire dont les chaînes macromoléculaires sont reliées entre elles par des atomes de soufre pour former un réseau tridimensionnel. Dans l'application aux liants routiers, la vulcanisation stabilise la dispersion de l'élastomère dans le bitume et permet d'abaisser la proportion d'élastomère nécessaire pour obtenir l'amélioration des propriétés souhaitée.

Quelle que soit l'application, la vulcanisation d'un élastomère est obtenue en le faisant réagir avec un agent de vulcanisation. L'agent de vulcanisation le plus classique est le soufre lui-même, mais divers composés soufrés, notamment organiques, ont été proposés comme agents de vulcanisation. Des additifs de vulcanisation tels qu'accélérateurs, retardateurs et antioxydants sont couramment employés conjointement à l'agent de vulcanisation.

FR-A-2 528 439 divulgue un procédé de préparation d'un mélange bitume-polymère dans lequel on provoque une vulcanisation à l'aide de soufre et/ou de composés soufrés.

DE-A-1 912 202 divulgue un procédé analogue, dans lequel le polymère est réticulé à l'aide de réactifs non soufrés.

On a constaté que le soufre se mouille mal dans la masse fondue de bitume et d'élastomère, ce qui conduit à une mauvaise dispersion et à une réaction violente provoquant un dégagement de chaleur important et une dégradation de l'élastomère. De plus, il est pratiquement impossible de prévoir le degré de vulcanisation qui sera atteint avec une quantité donnée de soufre, de sorte qu'on risque d'obtenir un mélange insuffisamment vulcanisé ou au contraire une masse gélifiée inutilisable. Enfin, il arrive que la réaction de vulcanisation, après s'être interrompue, reprenne beaucoup plus tard, à la faveur d'une élévation de température, par exemple après que le liant a été étendu sur une route, conduisant à des modifications indésirables des propriétés de celui-ci.

Les inconvénients ci-dessus existent également, quelquefois a un moindre degré, avec les autres agents de vulcanisation connus et dans d'autres applications des élastomères vulcanisés.

L'invention a pour but essentiel de permettre une bonne dispersion de l'agent de vulcanisation dans une masse à vulcaniser et de mener la réaction de vulcanisation d'une manière régulière jusqu'à un degré ultime prédéterminé.

On a également constaté que le soufre et les autres agents de vulcanisation connus forment entre les chaînes de l'élastomère des ponts polysulfure, c'est-à-dire formés de plusieurs atomes de soufre en série, qui sont relativement fragiles et risquent par conséquent de se rompre au cours de la réaction de vulcanisation ou par la suite.

Un autre but de l'invention est de proposer un agent de vulcanisation conduisant à des ponts plus solides que ceux fournis par le soufre élémentaire.

L'invention a pour objet un procédé selon la revendication 1.

Les thiurames utilisables comme donneur de soufre sont des composés comprenant au moins un radical thiurame. Parmi eux figure le disulfure de tétraméthylthiurame. Lorsque ce dernier est choisi comme donneur de soufre, sa concentration à ce titre s'ajoute aux 0,5 à 3 parties de ce composé présentes par ailleurs dans la composition.

Dans tous les cas, le mélange préalable de l'agent de vulcanisation et des autres constituants de la composition dans les proportions indiquées confère à celle-ci des propriétés tensioactives permettant sa bonne dispersion, notamment dans une masse bitumineuse. En outre, cette association des constituants assure une réaction régulière et complète de l'agent de vulcanisation.

Par ailleurs, le donneur de soufre associé au sulfénamide conduit à la formation de ponts monosulfure, plus solides que les ponts polysulfure dus à l'action du soufre sublimé. Le réseau formé est donc d'autant plus stable que la quantité de soufre dans la composition est plus basse et les quantités de donneur de soufre et de sulfénamide plus élevées.

L'antioxydant utilisé dans la composition peut être notamment un condensat d'acétodiphénylamine, par exemple celui commercialisé sous le nom Permanax BLW.

Une formule préférée de la composition comprend environ, en poids, 1 partie de sulfure de tétraméthylthiurame, 3 parties d'agent de vulcanisation, 5 parties d'oxyde de Zinc, 3 parties d'acide stéarique et 1 partie d'antioxydant.

Lorsque l'agent de vulcanisation comprend un donneur de soufre et un sulfénamide, il est avantageux de choisir pour ces derniers respectivement la dithio-4-4'-morpholine et le 2-benzothiazylsulfènemorpholide. Dans la formule préférée ci-dessus, ces derniers composés représentent de préférence respectivement 2 parties et 1 partie en poids environ, le soufre étant pratiquement absent.

Pour préparer la composition de vulcanisation, on mélange à sec les constituants à l'état de poudre, et on laisse refroidir le mélange à l'abri de l'humidité.

L'élastomère est de préférence un copolymère linéaire triséquencé choisi parmi les copolymères styrène-butadiène-styrène et les copolymères styrène-isoprène-styrène, et peut avoir une masse moléculaire comprise entre 100 000 et 300 000 environ.

Dans ce procédé, on prévoit notamment de mettre en oeuvre environ 20% en poids de la composition de vulcanisation par rapport à l'élastomère, celui-ci pouvant représenter entre 0,5% et 10% environ du poids du bitume. Toutefois, la proportion de la composition de vulcanisation n'a aucun caractère critique. Si elle diminue, on réduit simplement le degré de réticulation. Si elle augmente, il reste dans le produit final de l'agent de vulcanisation n'ayant pas réagi.

On a obtenu des résultats particulièrement satisfaisants en opérant de la façon suivante :
- on porte le bitume à une température comprise entre 150 et 180°C environ;
- on introduit progressivement l'élastomère en poudre fine au sein du bitume maintenu à ladite température et agité énergiquement;
- on maintient l'agitation et la température jusqu'à homogénéisation du mélange;
- on introduit la composition de vulcanisation dans les mêmes conditions que l'élastomère; et
- on maintient l'agitation et la température jusqu'à homogénéisation du mélange.

Pour la préparation de la composition selon l'invention, on peut utiliser un broyeur à poudre à axe horizontal tel que ceux commercialisés sous le nom Nautamix. Au cours du mélange, le produit s'échauffe et il est nécessaire de le laisser refroidir à l'abri de l'humidité afin d'éviter autant que possible la formation d'agrégats ou mottes dans la composition. Après refroidissement, la composition peut être mise en sacs pour une utilisation ultérieure.

Le procédé selon l'invention pour la préparation d'un liant routier peut utiliser tous les bitumes de type routier, qu'ils soient obtenus par distillation directe ou légèrement oxydés. On préfère cependant les bitumes aromatiques dont la pénétration est comprise entre 15 et 220 dixièmes de millimètre.

Comme indiqué plus haut, l'élastomère préféré est un copolymère linéaire triséquencé du type styrène-butadiène-styrène ou styrène-isoprène-styrène, d'une masse moléculaire comprise entre 100 000 et 300 000. Ces copolymères fondent à une température relativement peu élevée favorable à une bonne conservation de leurs propriétés et de celles des autres ingrédients utilisés.

Outre le bitume, l'élastomère et la composition de vulcanisation, il peut être utile d'introduire dans le liant une huile plastifiante très peu volatile de nature aliphatique ou aromatique, à raison de 0,2 à 5% par rapport au bitume, ainsi qu'un ester de colophane hydrogénée, ces deux composants favorisant le gonflement de l'élastomère et améliorant le pouvoir collant du liant. Comme huile plastifiante, on peut utiliser avantageusement un polyisobutène fondant à une température comprise entre 40 et 60°C, de masse moléculaire comprise entre 300 et 1500. De préférence, on introduit dans le bitume, en même temps que l'élastomère et au même endroit, un mélange composé de 80% environ de polyisobutène et de 20% environ d'ester de colophane, ce mélange représentant 0,3 à 3% du poids du bitume.

Le procédé selon l'invention conduit à des liants présentant une excellente adhésivité vis-à-vis des granulats lorsqu'ils sont utilisés secs, mais cette adhésivité est affectée par la présence d'humidité. Pour éviter ce phénomène, on peut avantageusement ajouter un agent d'adhésivité, notamment une polyamine grasse choisie parmi les alcoylimidazopolyamines et les oléylpolypropylènepolyamines, à raison de 0,1 à 0,5% du poids du bitume, et de préférence environ 0,3%. Cette addition doit intervenir le plus tard possible lors de l'élaboration du liant, car elle demande une énergie de malaxage importante à des températures comprises entre 130 et 150°C.

A titre d'exemple, une opération de préparation de liant par le procédé selon l'invention peut se dérouler de la façon suivante :
- on porte le bitume à 180°C en l'agitant dans un mélangeur chauffant. Dès que cette température est atteinte, on soumet le bitume à une agitation énergique, et on y introduit simultanément l'élastomère en poudre fine et le mélange de polyisobutène et d'ester de colophane, de telle sorte que les grains d'élastomère soient enrobés par ce mélange au moment où ils pénètrent dans le bitume. Il convient d'avoir recours à des moyens tels qu'un soc enfouisseur pour faire pénétrer ces constituants au sein du bitume. L'introduction est très progressive et dure dans cet exemple 1 h 30.

On continue l'agitation en maintenant la température jusqu'à homogénéisation parfaite du mélange, qui peut être vérifiée par microscopie ultraviolette. Cette homogénéisation dure 15 minutes. On introduit alors la composition de vulcanisation, en désagrégeant au besoin les mottes qui ont pu se former depuis la préparation de celle-ci. Cette addition dure 15 minutes, et est suivie d'un maintien de l'agitation et de la température pendant 15 minutes pour obtenir une dispersion complète, qu'on vérifie également par microscopie ultraviolette. Bien entendu les durées ci-dessus peuvent varier en fonction du matériel utilisé. L'agent d'adhésivité du type polyamine grasse est ajouté dans le mélange en mouvement juste avant l'expédition.

On donne ci-après une formule type d'un liant obtenu selon la présente invention, en parties pondérales :

| | |
|---|---|
| bitume | 100 |
| copolymère polystyrène-butadiène-polystyrène | 0,5 à 10 |
| polyisobutène (Napvis D10) | 0,24 à 2,4 |
| ester de colophane hydrogénée | 0,06 à 0,6 |
| composition de vulcanisation | 0,1 à 2 |
| polyamine grasse | 0,1 à 0,5 |

Ce liant peut être conservé, pompé et mis en oeuvre comme un bitume classique à des températures comprises entre 170 et 180°C suivant les usages.

En fonction des grades de bitume utilisés, des proportions d'élastomère et de plastifiant, les liants obtenus peuvent être utilisés pour fabriquer des enrobés à chaud à haut module, des enrobés à chaud en couches minces plus souples ou, moyennant des additifs fluidifiants et fluxants, des liants d'enduisage à très hautes performances.

## Revendications

1. Procédé de préparation d'un liant routier dans lequel on mélange un bitume et un élastomère à une température comprise entre 150 et 180° et on provoque ensuite une vulcanisation du mélange à l'aide d'une composition de vulcanisation pour élastomères comprenant en poids 0,5 à 3 parties de mercaptobenzothiazole, 0,5 à 3 parties de disulfure de tétraméthylthiurame, 3 à 5 parties d'oxyde de zinc, 1 à 3 parties d'acide stéarique, 1 à 4 parties d'antioxydant et 1 à 5 parties d'un agent de vulcanisation composé d'un donneur de soufre choisi parmi les thiurames et les dithiomorpholines et d'un sulfénamide, le rapport pondéral du sulfénamide au donneur de soufre étant compris entre 1/3 et 1, et le cas échéant de soufre sublimé, le donneur de soufre représentant au plus 75% et le sulfénamide au plus 50% en poids de l'agent de vulcanisation.

2. Procédé selon la revendication 1, caractérisé en ce que l'élastomère est un copolymère linéaire triséquencé choisi parmi les copolymères styrène-butadiène-styrène et les copolymères styrène-isoprène-styrène.

3. Procédé selon la revendication 2, caractérisé en ce que le copolymère a une masse moléculaire comprise entre 100 000 et 300 000 environ.

4. Procédé selon l'une des revendications précédentes, caractérisé en ce que le rapport pondéral de l'élastomère au bitume est compris entre 0,5% et 10% environ.

5. Procédé selon l'une des revendications précédentes, caractérisé en ce que le rapport pondéral de la composition de vulcanisation à l'élastomère est d'environ 20%.

6. Procédé selon l'une des revendications précédentes, caractérisé en ce que l'antioxydant contenu dans la composition de vulcanisation est un condensat d'acétodiphénylamine.

7. Procédé selon l'une des revendications précédentes, caractérisé en ce que la composition de vulcanisation comprend environ, en poids, 1 partie de disulfure de tétraméthylthiurame, 3 parties d'agent de vulcanisation, 5 parties d'oxyde de zinc, 3 parties d'acide stéarique et 1 partie d'antioxydant.

8. Procédé selon l'une des revendications précédentes, caractérisé en ce que le donneur de soufre contenu dans la composition de vulcanisation est la dithio-4-4'morpholine et que le sulfénamide est le 2-benzothiazylsulfènemorpholide.

9. Procédé selon la revendication 7 et la revendication 8, caractérisé en ce que la composition de vulcanisation comprend environ 2 parties de dithiomorpholine et 1 partie de sulfénamide et est sensiblement exempte de soufre.

10. Procédé selon l'une des revendications précédentes, caractérisé par les étapes suivantes :
- on porte le bitume à une température comprise entre 150 et 180° environ;
- on introduit progressivement l'élastomère en poudre fine au sein du bitume maintenu à ladite température et agité énergiquement;
- on maintient l'agitation et la température jusqu'à homogénéisation du mélange;
- on introduit la composition de vulcanisation dans les mêmes conditions que l'élastomère; et
- on maintient l'agitation et la température jusqu'à homogénéisation du mélange

11. Procédé selon l'une des revendications précédentes, caractérisé en ce qu'on incorpore au bitume un agent d'adhésivité choisi parmi les alcoylimidazopolyamines et les oléylpolypropylènepolyamines à raison de 0,1 à 0,5% en poids par rapport au bitume.

## Claims

1. Process of preparing a road binder in which a bitumen and an elastomer are mixed at a temperature between 150 and 180°C and then vulcanisation of the mixture is brought about with the aid of a vulcanisation composition for elastomers comprising 0.5 to 3 parts of mercaptobenzothiazole, 0.5 to 3 parts of tetramethylthiuram disulphide, 3 to 5 parts of zinc oxide, 1 to 3 parts of stearic acid, 1 to 4 parts of antioxidant and 1 to 5 parts of a vulcanisation agent composed of a sulphur donor selected from thiurams and dithiomorpholines and of a sulfenamide, the ratio by weight of the sulfenamide to the sulphur donor being between 1/3 and 1, and optionally of sublimed sulphur, the sulphur donor representing at most 75% and the sulphenamide at most 50% by weight of the vulcanisation agent.

2. Process according to Claim 1, characterised in that the elastomer is a triblock linear copolymer selected from styrene-butadiene-styrene copolymers and styrene-isoprene-styrene copolymers.

3. Process according to Claim 1, characterised in that the copolymer has a molecular weight of between about 100,000 and 300,000.

4. Process according to any preceding claim, characterised in that the weight ratio of the elastomer to the bitumen is between about 0.5 and 10%.

5. Process according to any of the preceding claims, characterised in that the weight ratio of the vulcanisation composition to the elastomer is about 20%.

6. Process according to any of the preceding claims, characterised in that the antioxidant present in the vulcanisation composition is a condensate of acetodiphenylamine.

7. Process according to any of the preceding claims, characterised in that the vulcanisation composition comprises, by weight, about 1 part of tetramethylthiuram disulphide, 3 parts of vulcanising agent, 5 parts of zinc oxide, 3 parts of stearic acid and 1 part of antioxidant.

8. Process according to any of the preceding claims, characterised in that the sulphur donor present in the vulcanisation composition is dithio-4-4'-morpholine and that the sulphenamide is 2-benzothiazolyl sulphene morpholide.

9. Process according to Claim 7 and Claim 8, characterised in that the vulcanisation composition comprises about 2 parts of dithiomorpholine and 1 part of sulphenamide and is substantially free from sulphur.

10. Process according to any of the preceding claims, characterised by the following steps:
- bitumen is brought to a temperature between about 150 and 180°C;
- the elastomer as a fine powder is introduced into the midst of the bitumen maintained at the said temperature and agitated energetically;
- the agitation and the temperature are maintained until the homogenisation of the mixture;
- the vulcanisation composition is introduced under the same conditions as the elastomer; and
- the agitation and the temperature are maintained until the homogenisation of the mixture.

11. Process according to any of the preceding claims, characterised in that there is incorporated into the bitumen an adhesive agent selected from alkylimidazo polyamines and oleylpolypropylene polyamines at the rate of 0.1 to 0.5% by weight with respect to the bitumen.

## Patentansprüche

1. Verfahren zur Herstellung eines Straßenbindemittels, in welchem ein Bitumen und ein Elastomer bei einer Temperatur zwischen 150 und 180°C gemischt wird und anschließend eine Vulkanisation des Gemischs mittels einer Vulkanisationszusammensetzung für Elastomere hervorgerufen wird, welche 0,5 bis 3 Gew.-Teile Mercaptobenzothiazol, 0,5 bis 3 Gew.-Teile Tetramethylthiuramdisulfid, 3 bis 5 Gew.-Teile Zinkoxid, 1 bis 3 Gew.-Teile Stearinsäure, 1 bis 4 Gew.-Teile Antioxidationsmittel und 1 bis 5 Gew.-Teile eines Vulkanisationsmittels umfaßt, welches aus einem Schwefeldonor, der aus den Thiuramen und den Dithiomorpholinen ausgewählt wird, und einem Sulfenamid, wobei das Gewichtsverhältnis des Sulfenamids zum Schwefeldonor zwischen 1/3 und 1 liegt, und gegebenenfalls sublimiertem Schwefel zusammengesetzt ist, wobei der Schwefeldonor höchstens 75 Gew.-% und das Sulfenamid höchstens 50 Gew.-% des Vulkanisationsmittels ausmacht.

2. Verfahren nach Anspruch 1, **dadurch gekennzeichnet,** daß das Elastomer ein lineares Dreiblockcopolymer, ausgewählt aus den Copolymeren Styrol-Butadien-Styrol und den Copolymeren Styrol-Isopren-Styrol, ist.

3. Verfahren nach Anspruch 2, **dadurch gekennzeichnet,** daß das Copolymer eine Molmasse zwischen ungefähr 100 000 und 300 000 hat.

4. Verfahren nach einem der vorhergehenden Ansprüche, **dadurch gekennzeichnet,** daß das Gewichtsverhältnis des Elastomers zum Bitumen zwischen ungefähr 0,5% und 10% liegt.

5. Verfahren nach einem der vorhergehenden Ansprüche, **dadurch gekennzeichnet,** daß das Gewichtsverhältnis der Vulkanisationszusammensetzung zum Elastomer ungefähr 20% beträgt.

6. Verfahren nach einem der vorhergehenden Ansprüche, **dadurch gekennzeichnet,** daß das in der Vulkanisationszusammensetzung enthaltene Antioxidationsmittel ein Kondensat von Acetodiphenylamin ist.

7. Verfahren nach einem der vorhergehenden Ansprüche, **dadurch gekennzeichnet,** daß die Vulkanisationszusammensetzung ungefähr 1 Gew.-Teil Tetramethylthiuramdisulfid, 3 Gew.-Teile Vulkanisationsmittel, 5 Gew.-Teile Zinkoxid, 3 Gew.-Teile Stearinsäure und 1 Gew.-Teil Antioxidationsmittel umfaßt.

8. Verfahren nach einem der vorhergehenden Ansprüche, **dadurch gekennzeichnet,** daß der in der Vulkanisationszusammensetzung enthaltene Schwefeldonor 4,4'-Dithiomorpholin ist und daß das Sulfenamid 2-Benzothiazylsulfenmorpholid ist.

9. Verfahren nach Anspruch 7 und Anspruch 8, **dadurch gekennzeichnet,** daß die Vulkanisationszusammensetzung ungefähr 2 Teile Dithiomorpholin und 1 Teil Sulfenamid umfaßt und im wesentlichen frei von Schwefel ist.

10. Verfahren nach einem der vorhergehenden Ansprüche, **gekennzeichnet durch** die folgenden Schritte:
das Bitumen wird auf eine Temperatur zwischen ungefähr 150 und 180°C gebracht;
das Elastomer wird als feines Pulver nach und nach in das Bitumen eingebracht, welches auf der genannten Temperatur gehalten und kräftig gerührt wird;
das Rühren und die Temperatur werden bis zur Homogenisierung des Gemisches beibehalten;
die Vulkanisationszusammensetzung wird unter den gleichen Bedingungen wie das Elastomer eingebracht; und
das Rühren und die Temperatur werden bis zur Homogenisierung des Gemisches beibehalten.

11. Verfahren nach einem der vorhergehenden Ansprüche, **dadurch gekennzeichnet,** daß ein Klebemittel, das unter den Alkylimidazopolyaminen und den Oleylpolypropylenpolyaminen ausgewählt wird, in einer Menge von 0,1 bis 0,5 Gew.-%, bezogen auf das Bitumen, in das Bitumen eingebracht wird.
